# EUROPEAN PATENT APPLICATION

(11) **EP 3 381 342 A1**
(43) Date of publication of application: **03.10.2018**
(21) Application number: 18164332.1
(22) Date of filing: 27.03.2018
(51) Int. Cl.: A47K 13/26, F16B 13/08

(54) **DEVICE FOR THE FASTENING OF AN OBJECT TO A SANITARY FURNITURE UNIT AND SANITARY FURNITURE UNIT AND DEVICE ASSEMBLY**

(30) Priority: 31.03.2017 ES 201700469
(71) Applicant: Ceravalls Pujol, Sr. Ramón, 08211 Castellar Del Valles (ES); López Puche, Dna. Nuria, 08211 Castellar Del Valles (ES)
(72) Inventor: BARROSO, José Manuel, 08211 Castellar del Valles (ES); COPETE, Ángel, 08211 Castellar del Valles (ES)
(74) Representative: Ponti & Partners, S.L.P

(57) **Abstract**

It comprises an element (13) for the attachment of the object on a sanitary furniture unit (1), a clamping element (5) associated with said coupling element (13), an anchoring base (4) for the anchoring of said clamping element (5), and supporting means (6) for said anchoring base (4), said anchoring base (4) and supporting means (6) being susceptible to be inserted via a through-hole (2) in an upper wall (3) of the sanitary furniture unit (1), the device featuring means (7) for the fastening of the anchoring base (4) against an internal surface (11) of the sanitary furniture unit (1) during a prior assembly; it is characterised by the fact that said means for fastening the anchoring base (4) comprise a perforated piece adapted to be disposed on the wall (3) of the sanitary furniture unit (1) and to receive the clamping of the clamping element (5); said perforated piece (7) featuring means (9,10) for its adjustable attachment to the supporting means (6) of the anchoring base (4), in accordance with the thickness of the through-hole (2), said perforated piece (7) being configured in such a way that, once attached to the supporting means (6), it may be displaced horizontally over the wall (3) of the sanitary unit (1) in order to adjust the position of the anchoring point of the clamping element (5) within the through-hole (2) of the sanitary furniture unit (1).

## Description

The present invention relates to a device for the fastening of an object to a sanitary furniture unit and to an assembly of sanitary furniture unit and device. Specifically, the present invention relates to a device for the fastening of an object, such as a cover, to a ceramic or porcelain sanitary furniture unit, such as a toilet.

### Background of the invention

Devices for the fastening of an object, such as a cover, to a sanitary furniture unit, such as a toilet, are well known. These devices comprise a pin for the mechanical coupling of the cover to the toilet, a clamping piece, such as a clamping bolt, which is associated with said mechanical coupling pin and is susceptible to traverse a through-hole featured at the upper wall of the toilet. These devices further comprise a base for the anchoring of the clamping bolt, a pair of supporting struts pivotally attached to the anchoring base in order that they may traverse the through-hole, and a fastening ring of said anchoring base, which is insertable into the through-hole in the aforementioned upper wall.

In the devices mentioned in the above paragraph, the fastening ring includes a number of grooves provided with means for the adjustable coupling of the supporting struts in accordance with the thickness of the through-hole. Thus, the anchoring base may be fastened by the ring and the supporting struts against the internal surface of the sanitary furniture unit, whatever the thickness of the wall featuring the through-hole. A metal washer, attached to the mechanical coupling pin of the cover, is located on the fastening ring, and comprises a hole for the passage of the clamping bolt.

Patent ES2251990 T3 discloses a device such as those described in the previous paragraph and presents the advantage that the assembly of the entirety of its components may be performed from the upper wall of the sanitary unit, via the through-holes provided in said upper wall of the unit. Thanks to this, the device may be adapted to both open- and enclosed-bodied toilets. Another advantage of the device disclosed in the aforementioned patent lies in the fact that during assembly, the fastening ring and the supporting struts fasten the anchoring base of the clamping bolt; therefore, said bolt may be assembled and disassembled on said anchoring base during installation.

However, the device disclosed in patent ES2251990 T3 presents the drawback that the anchoring position of the clamping bolt within the through-hole remains fixed. Due to this, the position of the coupling pin of the cover on the surface of the toilet must be established by giving free space in a through-hole for the clamping bolt of a metal washer incorporated in this coupling pin. This metal washer may be displaced with regard to the clamping bolt in order to adjust the position of the coupling pin.

It is necessary to adjust the position of the coupling pin of the object in order to absorb the manufacturing tolerances of the material of the sanitary unit and to enable the precise adjustment of the position of the object on the sanitary unit. However, the adjustment enabled by the devices such as those disclosed in patent ES 2251990 T3 is limited.

### Description of the invention

The object of the present invention is to provide a device for the fastening of an object to a sanitary furniture unit that solve the aforementioned problems and which provides the advantages to be described below.

In accordance with this objective, in a first aspect, the present invention provides a device for the fastening of an object to a sanitary furniture unit, comprising an element for the coupling of the object on the sanitary furniture unit, a clamping element associated with said coupling element, an anchoring base for said clamping element, and supporting means for said anchoring base, the anchoring base and the supporting means being susceptible to be inserted via a through-hole from an upper wall of the sanitary unit, and said device further comprising means for the fastening of the anchoring base against an internal surface of the upper wall of the sanitary unit.

The device is characterised by the fact that the means for the fastening of the anchoring base comprise a perforated piece susceptible to be coupled to the supporting means and adapted to be disposed on the upper wall of the sanitary unit and to receive the clamping of the clamping element, said perforated piece being configured in such a way that it may be displaced horizontally over the upper wall of the sanitary unit in order to adjust the position of the anchoring point of the clamping element within the through-hole.

In accordance with the same objective, in a second aspect, the present invention provides a sanitary furniture unit and device assembly such as that claimed for the fastening of an object to a sanitary furniture unit, preferably a ceramic or porcelain sanitary unit.

In the device claimed, the perforated piece fastening the anchoring base in the interior of the unit is configured in such a way that it may be displaced horizontally over the upper wall of the sanitary unit while it remains coupled to a number of supporting struts of the anchoring base. Thanks to this, a device is obtained that enables the assembly and disassembly of the clamping bolt or element during assembly and, unlike the devices such as those disclosed in patent ES2251990 T3, further enables the precise 360º adjustment of the position of the anchoring point of the clamping bolt within the through-hole. The adjustment takes place horizontally displacing the perforated piece over the upper wall of the furniture unit in order to adjust the position of the pin or mechanical coupling element of the object affixed to the sanitary unit.

Indeed, the configuration of the perforated piece included in the device for the fastening of the anchoring base enables the installer to displace said perforated piece over the upper wall of the sanitary unit in order to adjust the position of the anchoring base with maximum precision, and consequently, also the position of the anchoring point of the clamping element.

Preferably, this perforated piece which fastens the anchoring base include a means for its adjustable coupling to the supporting means of the anchoring base within the sanitary furniture unit. Thus, the device may be adapted to sanitary units of varying wall thicknesses. Furthermore, this perforated piece is adapted with a surface to receive the clamping of the clamping element; the material (e.g. ceramics) of the sanitary unit is thus protected.

On the other hand, both the anchoring base and the means supporting said anchoring base are configured in such a way as to be susceptible to be inserted via a through-hole in an upper wall of the sanitary furniture unit; the device claimed may thus be adapted to both open- and enclosed-bodied toilets.

In accordance with a preferred embodiment, the perforated piece is configured in the form of a washer, with an orifice to enable the passage of the clamping bolt or element. Specifically, the perforated piece is configured with a substantially flat base surface, adapted to be arranged on a wall of the sanitary unit, in correspondence with a through-hole in said wall, said perforated piece including at least one groove adapted to receive a supporting strut of the anchoring base.

Advantageously, the perforated piece includes at least one groove provided with coupling means susceptible to adjustedly cooperate with a supporting strut of the anchoring base, depending on the thickness of the through-hole in the upper wall of the sanitary unit.

In accordance with the same preferred embodiment, the supporting means of the anchoring base comprise at least one pair of supporting struts, each equipped with a plurality of coupling teeth disposed so as to cooperate by clipping with a coupling lug foreseen within the groove of the perforated piece receiving each supporting strut.

In accordance with one embodiment, the material of the supporting struts is a breakable material that may be cut manually subsequent to the adjustment of the coupling height of the perforated piece fastening the anchoring base. However, in accordance with another embodiment, said supporting struts are configured from a flexible polymeric material susceptible to be folded against the internal surface of the sanitary unit for the self-adjustment of the position of the anchoring base.

Advantageously, each supporting strut is articulatedly attached to the anchoring base in such a way that it may tilt with regard to said anchoring base in order to facilitate the insertion of both components via the through-hole of the sanitary furniture unit.

Preferably, the anchoring base comprises a threaded hole to receive a threaded section of the clamping bolt or element and, in accordance with one embodiment, the anchoring base further comprises a plurality of through-holes arranged for each to be traversed by one extremity of one of said supporting struts, said through-holes, in combination with said supporting struts, enabling the self-adjustment of the position of the anchoring base against the internal surface of the sanitary furniture unit.

Alternatively, in the place of the aforementioned through-holes, the anchoring base may comprise a plurality of elongated holes disposed to receive articulated axes of said supporting struts, said elongated holes enabling the self-adjustment of the position of the anchoring base against the internal surface of the sanitary unit in order to absorb the irregularities of the material of the unit. In this way, the anchoring base may be affixed optimally against the internal surface of the sanitary unit, adapting to any possible irregularities in the material of the internal surface of the sanitary furniture unit.

Advantageously, the perforated piece is a clamping washer, preferably a plastic clamping washer, and said device further features another perforated piece configured by way of a second clamping washer to be arranged on said plastic clamping washer.

Advantageously, the clamping washer defining the perforated piece comprises a surface to receive the clamping of the clamping element, an orifice to enable the passage of the clamping element and at least one groove adapted to receive a supporting strut of the anchoring base. The surface of the base of this washer is preferably a substantially flat surface, specifically a surface adapted to be disposed on the external wall of the sanitary unit, on the exterior of the unit, in correspondence with the through-hole in the sanitary furniture unit.

Although in some embodiments, the supporting struts may be articulatedly attached to the anchoring base of the clamping element, in such a way that they may tilt with regard to said base in order to adopt a position that may facilitate the insertion of the anchoring base and the strut itself via the through-hole of the sanitary unit. However, in other embodiments, the anchoring base and the supporting struts may be attached without articulations and said anchoring base may be constituted by an elastic material that may be folded for its insertion via the through-hole of the sanitary unit, subsequently recovering its original position.

Likewise, but in preferred embodiments, the element for the coupling of the object is a mechanical coupling pin linked to or incorporated in the clamping head of the clamping element itself, which is inserted via the through-hole of the sanitary unit. However, in other embodiments, said coupling element may be a mechanical coupling pin foreseen in the second, metal, clamping washer arranged over the perforated piece that fastens the anchoring base.

Depending on the embodiment, the object and the sanitary furniture unit referred to in the present invention may be a cover fastened to a toilet, or any other type of object to be fastened to any other type of sanitary furniture unit, preferably a ceramic or porcelain sanitary furniture unit.

### Brief description of the figures

For the purpose of aiding the better understanding of the description made herein, a set of drawings is attached wherein, schematically and by way of a non-limitative example, a practical example of an embodiment of the device claimed is portrayed. In this embodiment, the object is a cover that should be fastened to a ceramic or porcelain toilet via two through-holes foreseen in the upper wall of an enclosed-bodied toilet.
Figure 1 is an exploded view of the device claimed.
Figure 2 is a detail perspective view portraying the toilet and the perforated piece of the device coupled to two supporting struts of the anchoring base. To facilitate the understanding of the assembly of the device, the toilet has been portrayed with a cutaway section at the level of the through-hole foreseen in the upper wall for the insertion of the struts and the anchoring base.
Figure 3 is a detail perspective view of the cutaway section of the toilet in Figure 2, portraying the supporting struts tilted with regard to the anchoring base in order to facilitate their insertion via the through-hole of the upper wall of the toilet.
Figure 4 is a detail lateral view of the cutaway section of the toilet in Figure 2, portraying the anchoring base and the supporting struts subsequent to being inserted via the through-hole, likewise the perforated piece attached to the supporting struts and disposed over the upper wall of the toilet at a level adjusted in accordance with the thickness of the through-hole.

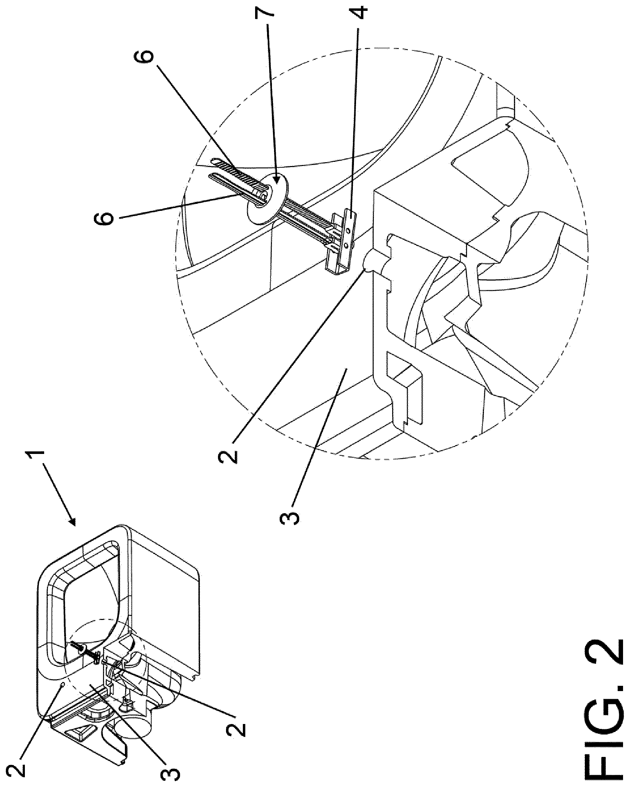

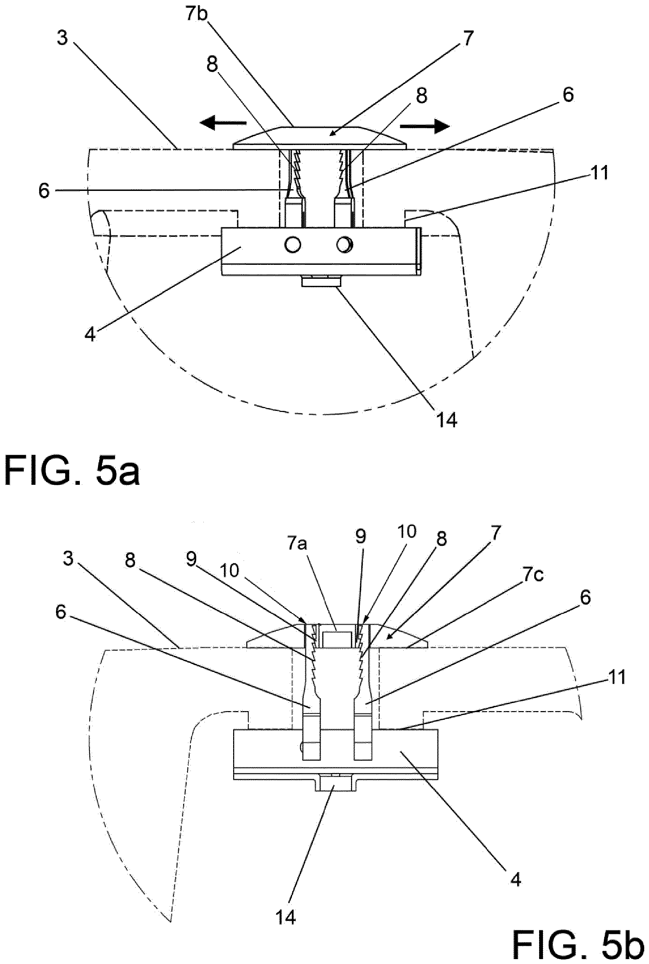

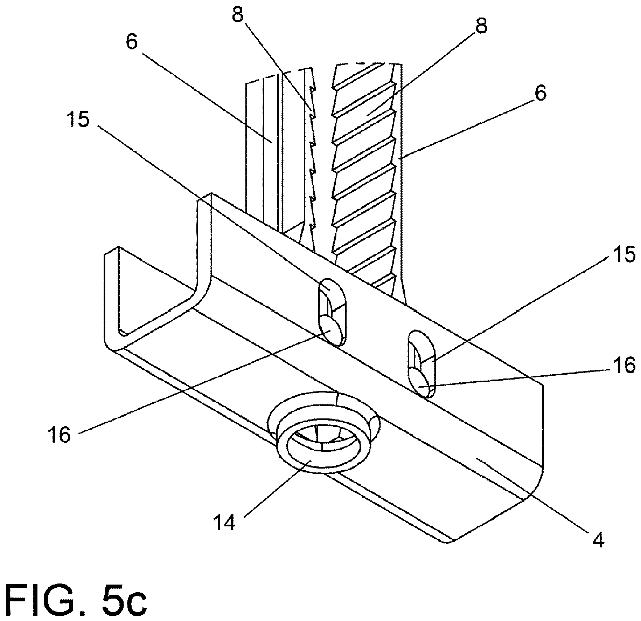

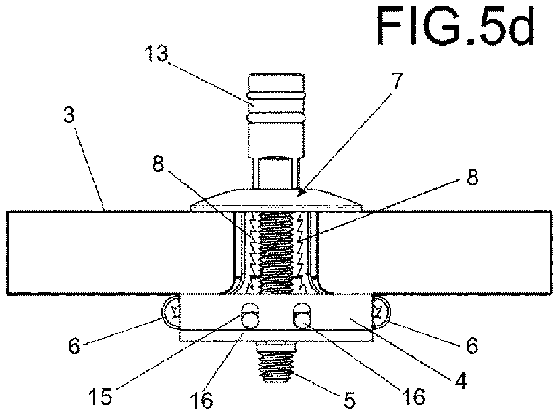

Figure 5a is a detail lateral view of the cutaway section of the toilet in Figure 2, portraying the perforated piece attached to the supporting struts of the anchoring base, subsequent to their trimming. Figure 5b portrays a cross-section of the detail lateral view in Figure 5a. Figure 5c portrays a view of a particular embodiment of the anchoring base, featuring a number of elongated holes in which articulated axes of the supporting struts of the anchoring base are housed. Figure 5d portrays an embodiment wherein the supporting struts are configured from a flexible polymeric material susceptible to be folded against the internal surface of the sanitary unit.
Figure 6 is a view portraying the assembly formed by the perforated piece which fastens, in the form of a washer, the anchoring base when held by the struts, the second clamping washer and a clamping bolt integrating the element for the coupling of the object.
Figure 7 is a detail lateral view of the cutaway section of the toilet in Figure 2, portraying the device installed on the upper wall of the toilet.
Figure 8 is a view portraying an upper detail of the device, totally installed on the upper wall of the toilet in Figure 2.
Figures 9 and 10 are two schematic views of an embodiment of the device, including an anchoring base with two through-holes, each disposed to be traversed by one extremity of one of the supporting struts.

### Description of preferred embodiments

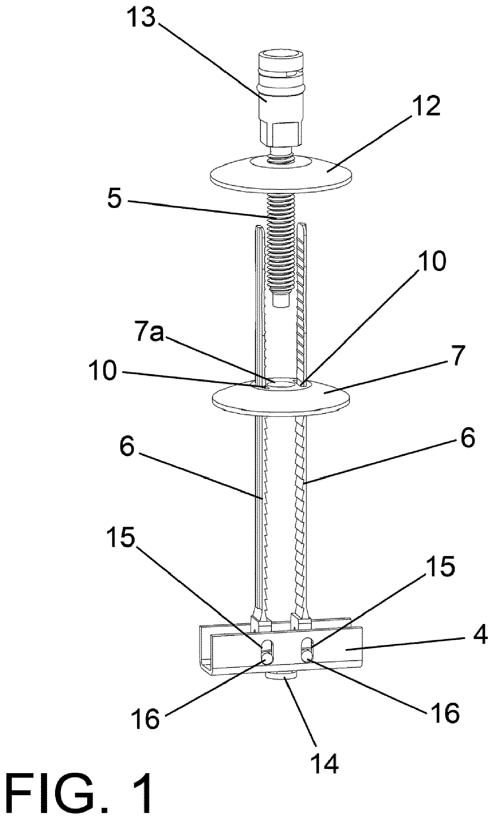

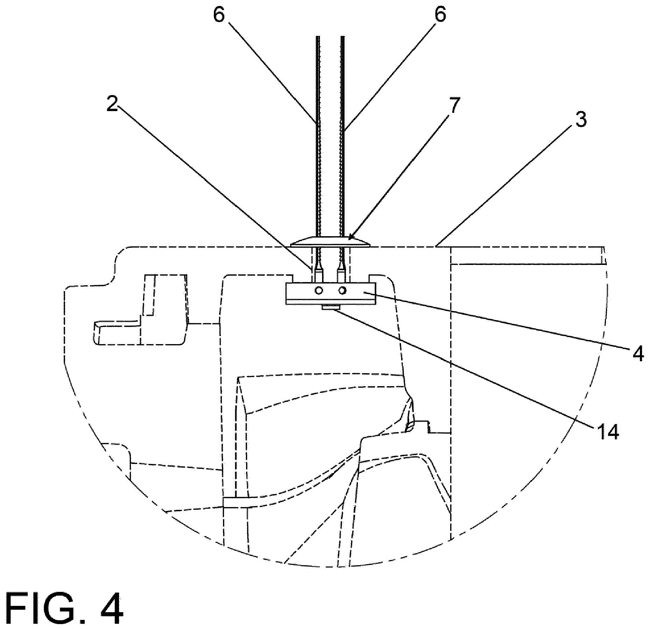

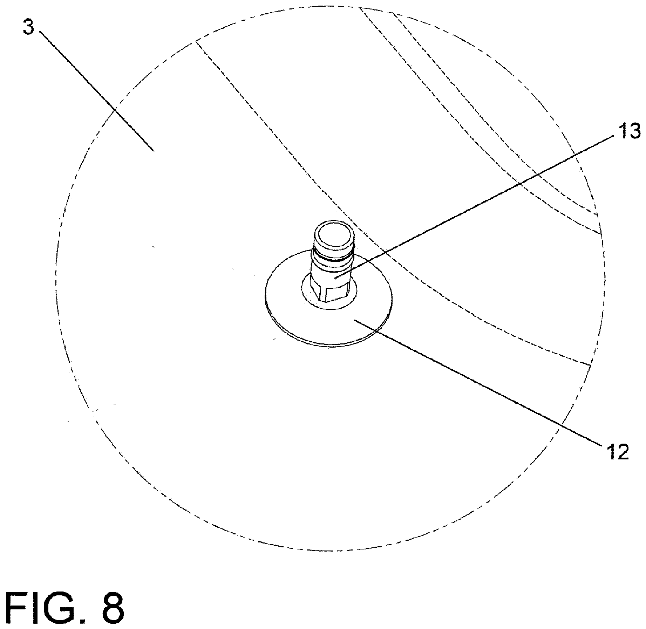

A description of a number of preferred embodiments of the device claimed is to be found below, with reference to Figures 1 to 10.

Figure 1 portrays an exploded view of the components of an embodiment of the device. In the embodiment portrayed by the figures, the function of the device is to fasten a cover to a toilet, via a pair of through-holes 2 foreseen in the upper wall 3 of the toilet (see Figure 2).

The device claimed comprises an anchoring base 4 provided with a threaded orifice 14 to receive the threaded section of a clamping bolt or element 5, a number of supporting struts 6 of the anchoring base 4 and a perforated piece 7 for the fastening of the anchoring base 4. In the embodiment described, this perforated piece 7 is made of plastic and is configured in the form of a washer, in such a way that it may be displaced horizontally over the wall 3 of the toilet in order to adjust the position of the anchoring point of the clamping bolt or element 5 within the through-hole 2 of the sanitary furniture unit 1.

The perforated piece 7 includes an orifice 7a for the passage of the clamping element or bolt 5, a surface 7b adapted to receive the clamping of said clamping element or bolt 5, and another substantially flat surface 7c, adapted to be disposed against the upper wall 3 of the toilet, subsequent to the adjustment of the coupling height by means of the supporting struts 6 of the anchoring base 4 (see Figures 5a, 5b). The supporting struts 6 each feature a plurality of coupling teeth 8 disposed so as to cooperate with corresponding coupling lugs 9 disposed within a number of grooves 10 for the passage of the supporting struts 6 (see Figure 5b).

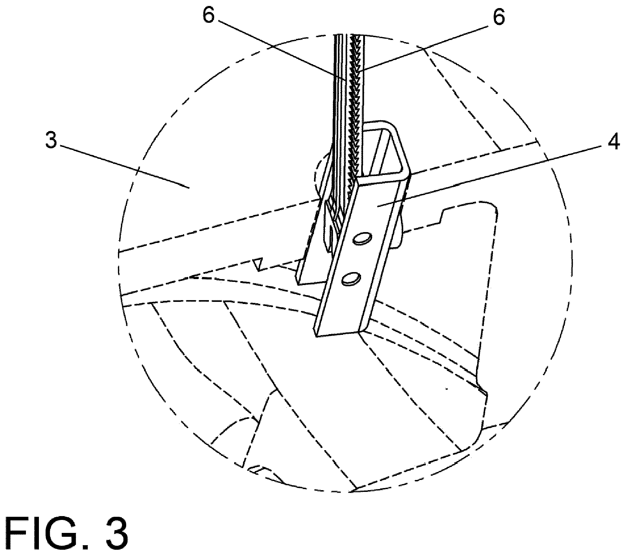

As may be seen in Figure 3, the supporting struts 6 are articulatedly attached to the anchoring base 4 in such a way that they may tilt with regard to said anchoring base 4 in order to facilitate the insertion of both components via the through-hole 2 in the upper wall 3 of the toilet. Thanks to this arrangement, the device claimed may be adapted to both open- and enclosed-bodied toilets.

Figures 5a and 5b portray a detail lateral view of the cutaway section of the toilet wherein the anchoring base 4 is fastened against an internal surface 11 of the upper wall 3 of the toilet, held by the perforated piece 7 coupled to the supporting struts 6, which have been manually trimmed at the level of the surface 7b adapted to receive the clamping of the clamping bolt or element 5. The anchoring base 4 thus being correctly positioned and fastened against the internal surface 11 of the sanitary unit 1, the clamping bolt or element 5 may be assembled and disassembled on said anchoring base 4, this being highly practical.

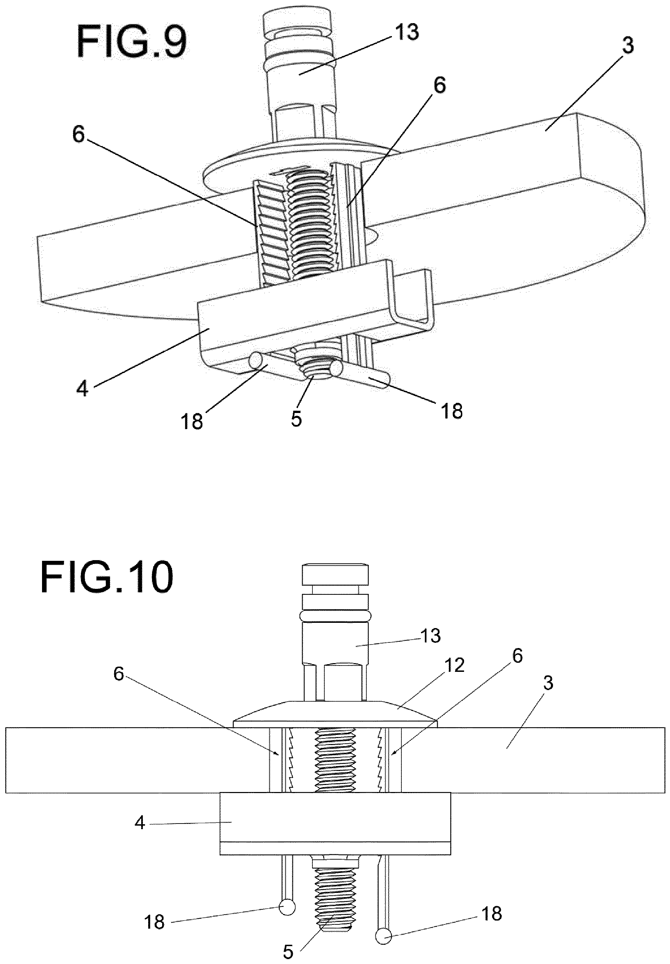

As has been mentioned in the description of the invention, on occasions the internal ceramic surface 11 presents flashes or ridges derived from the manufacture of the same. In the event that the anchoring base 4 should be fixed over a flash, the subsequent tightening of the clamping bolt or element 5 might cause said anchoring base 4 to become displaced and not remain parallel to the ceramic surface 11. The elongated holes 15 in which the articulated axes 16 of the supporting struts 6 are housed (see Figure 5c) enable the anchoring base 4 to self-adjust and become parallel to the internal ceramic surface 11. Optionally, the supporting struts 6 may be configured from a flexible polymeric material susceptible to be folded against the internal surface 11 of the ceramic in order to facilitate the self-adjustment of the anchoring base 4 (see Figure 5d). This flexible polymeric material may be, for example, low-density polyethylene (PE), or any other material with elastic properties. In accordance with another embodiment, the anchoring base 4 may include a pair of through-holes 17, each disposed to be traversed by one extremity 18 of one of the supporting struts 6, said through-holes, in combination with said supporting struts 6, enabling the self-adjustment of the position of the anchoring base 4 against the internal surface 11 of the sanitary furniture unit 1 (see Figures 9 and 10).

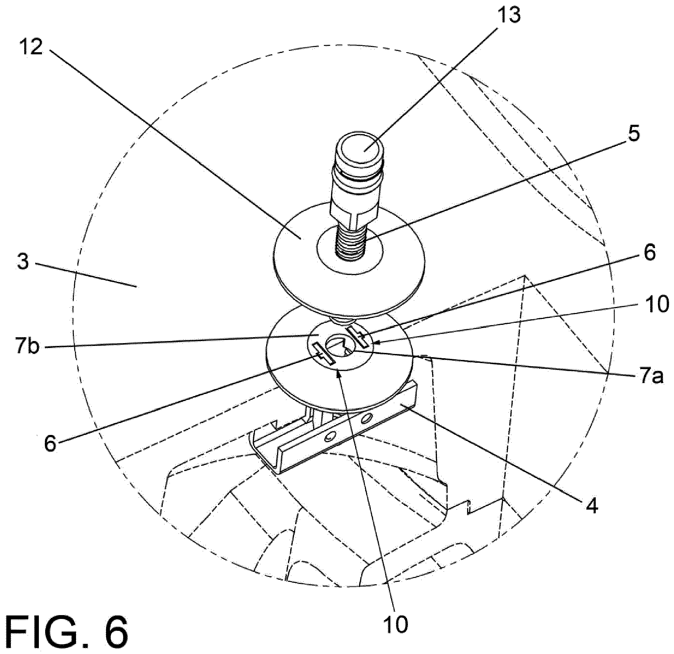

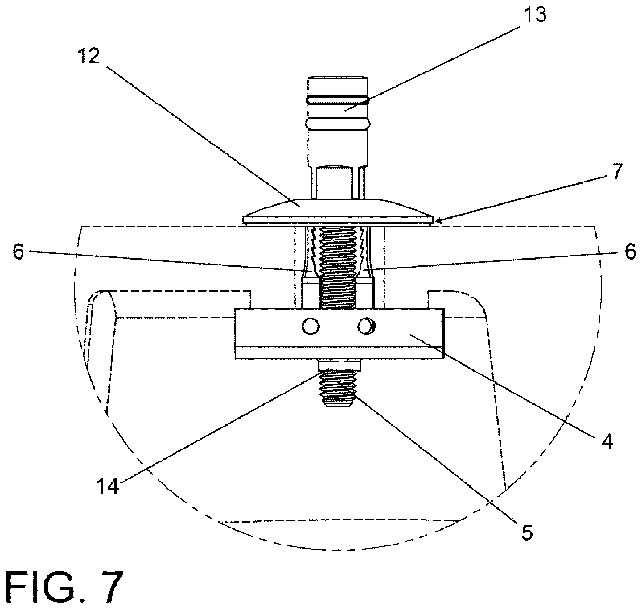

As may be seen in Figures 6 and 7, on the perforated piece 7 that fastens the anchoring base 4, another perforated piece is disposed, configured as a second clamping washer 12 featuring a hole for the passage of a clamping bolt or element 5. In the embodiment portrayed in the figures, the coupling element or pin 13 of the object (the cover) is integrated in the head of the clamping bolt or element 5. However, in other embodiments, this coupling element or pin 13 may be part of the second clamping washer 12 and may constitute an independent part of the clamping bolt or element 5.

To carry out the assembly of the device described in the figures, the threaded section of the clamping bolt or element 5 integrating the coupling element or pin 13 is inserted through the orifice in the second clamping washer 12 and through the orifice 7a in the perforated piece 7 that fastens the anchoring base 4 and is threaded into the threaded hole 14 in the anchoring base 4. Prior to fastening the clamping bolt or element 5 in the anchoring base 4, the user may adjust with precision the position of the coupling element or pin 13 by horizontally displacing the perforated piece 7 and the second washer 12 over the upper wall 3 of the toilet to modify the position of the anchoring point of the clamping bolt or element 5 within the through-hole 2, and thereby the position of the mechanical coupling pin or element 13 of the cover (not portrayed). Thus, unlike the devices such as those disclosed in patent ES2251990 T3, the device claimed enables the adjustment with the greatest precision (360°) of the position of the mechanical coupling pin of the object on the sanitary furniture unit 1.

Once the position of the anchoring points of the clamping bolt or element 5 has been adjusted within each through-hole 2 of the toilet, the user proceeds to tighten the clamping bolt or element 5 against the second washer 12 and the perforated piece 7 in order to fasten the definitive position of each mechanical coupling pin or element 13 of the cover (not portrayed) on the toilet. At this point, he may proceed to attach the cover to the coupling element 13 in order that it may be correctly fastened on the toilet.

Notwithstanding that reference has been made to a specific embodiment of the invention, it is evident to one skilled in the art that the device disclosed is susceptible to numerous variations and modifications, and that the entirety of the details mentioned may be replaced by other technically equivalent details without straying from the scope of protection defined by the attached claims. For example, although the figures portray an embodiment wherein the coupling pin or element 13 is integrated in the head of the clamping bolt or element 5, in accordance with other embodiments the coupling pin or element 13 may be included in the body itself of a second clamping washer 12 intended to be arranged on the perforated piece 7 which fastens the anchoring base 4.

## Claims

1. A device for the fastening of an object to a sanitary furniture unit (1), comprising a coupling element (13) for the coupling of the object on the sanitary furniture unit (1), a clamping element (5) associated with said coupling element (13), a base (4) for the anchoring of said clamping element (5), and supporting means (6) for said anchoring base (4), the anchoring base (4) and said supporting means (6) being susceptible to being inserted via a through-hole (2) in an upper wall (3) of the sanitary furniture unit (1), and said device including means (7) for the fastening of the anchoring base (4) against an internal surface (11) of the sanitary furniture unit (1) during a pre-assembly, **characterised in that** said means for the fastening of the anchoring base (4) comprise a perforated piece (7) susceptible to being coupled to the supporting means (6), said perforated piece (7) including a surface adapted to be disposed on the wall (3) of the sanitary furniture unit (1) and to receive the clamping of the clamping element (5), and said perforated piece (7) being configured in such a way that, once attached to the supporting means (6), it may be displaced horizontally over the wall (3) of the sanitary unit (1) in order to adjust the anchoring position of the clamping element (5) within the through-hole (2) of the sanitary unit (1).

2. A device as claimed in claim 1, wherein said perforated piece (7) fastening the anchoring base (4) is configured in the form of a washer and is provided with at least one groove (10) adapted to receive a supporting strut (6) of the anchoring base (4),

3. A device as claimed in claims 1 or 2, wherein said perforated piece (7) is configured in the form of a washer with a substantially flat base surface (7c), adapted to be arranged on a wall (3) of the sanitary unit, in correspondence with a through-hole (2) in said wall (3), said perforated piece (7) comprising at least one groove (10) adapted to receive a supporting strut (6) of the anchoring base (4), and said groove (10) including coupling means (9) susceptible to adjustedly cooperate with the supporting strut (6) of said anchoring base (4).

4. A device as claimed in either of claims 2 or 3, wherein said supporting means of the anchoring base (4) comprise at least one pair of supporting struts (6), each of them provided with a plurality of coupling teeth (8) arranged so as to cooperate by clipping with a coupling lug (9) foreseen within the grooves (10) of the perforated piece (7) which receive each of the supporting struts (6).

5. A device as claimed in any of claims 2 to 4, wherein each supporting strut (6) is articulately attached to the anchoring base (4) in such a way that it may tilt with regard to said anchoring base (4) in order to facilitate the insertion of both components (4,6) via the through-hole (2) of the sanitary furniture unit (1).

6. A device as claimed in any of claims 4 to 5, wherein said anchoring base (4) comprises a plurality of through-holes (17) each of them arranged so as to be traversed by a free extremity (18) of one of said supporting struts (6), said through-holes (17), in combination with the supporting struts (6), enabling the self-adjustment of the position of the anchoring base (4) against the internal surface (11) of the sanitary furniture unit (1).

7. A device as claimed in any of claims 4 to 5, wherein said anchoring base (4) comprises a plurality of elongated holes (15) arranged to receive articulated axes (16) of said supporting struts (6), said elongated holes (15) enabling the self-adjustment of the position of the anchoring base (4) against the internal surface (11) of the sanitary furniture unit, in order to absorb the irregularities of the material.

8. A device as claimed in any of claims 4, 5 and 7, wherein said supporting struts (6) are configured from a flexible polymeric material susceptible to be folded against the internal surface (11) of the sanitary unit for the self-adjustment of the position of the anchoring base (4).

9. A device as claimed in any of the preceding claims, wherein said clamping element (5) is a bolt incorporating in its clamping head the element (13) for the attachment of the object on the sanitary furniture unit (1).

10. A device as claimed in any of claims 1 to 9, wherein said anchoring base (4) includes a threaded orifice (14) to receive therein a threaded section of the clamping element (5).

11. A device as claimed in any of the preceding claims, wherein said perforated piece (7) is configured in the form of a clamping washer with a surface (7b) foreseen to receive the clamping of said clamping element (5) and an orifice (7a) to enable the passage of said clamping element (5).

12. A device as claimed in any of the preceding claims, comprising a second perforated piece (12) configured as a second clamping washer to be arranged over the perforated piece (7) which fastens the anchoring base (4).

13. A device as claimed in claim 12, when dependent on claim 1, wherein said second perforated piece (12) configured in the form of a second clamping washer incorporates the element (13) for the coupling of the object on the sanitary furniture unit (1).

14. A sanitary furniture unit (1) and device assembly, as claimed in any of claims 1 to 13, wherein said sanitary furniture unit is made of ceramics or porcelain.

15. An assembly as claimed in claim 14, wherein said ceramic or porcelain sanitary furniture unit (1) is a toilet, and said object is a cover susceptible to be attached to a coupling pin or element (13) of the device.
